# DEMANDE DE BREVET EUROPEEN

(11) **EP 3 771 059 A1**
(43) Date de publication de la demande: **27.01.2021**
(21) Numéro de dépôt: 20180283.2
(22) Date de dépôt: 16.06.2020
(51) Int. Cl.: H02J 1/10, H02J 7/16

(54) **PROCÉDÉ D'ALIMENTATION ÉLECTRIQUE D'UN RÉSEAU ÉLECTRIQUE ET ARCHITECTURE ÉLECTRIQUE**

(30) Priorité: 25.07.2019 FR 1908442
(71) Demandeur: Airbus Helicopters, 13725 Marignane Cedex (FR)
(72) Inventeur: GAZZINO, Marc, 13012 MARSEILLE (FR); MOUTON, Christophe, 13150 TARASCON (FR)
(74) Mandataire: GPI Brevets

(57) **Abrégé**

La présente invention concerne un procédé d'alimentation électrique d'un réseau électrique non régulé en tension électrique ainsi qu'une architecture électrique (5). Ladite architecture électrique (5) comporte plusieurs sources d'énergie électrique (11) dont au moins un dispositif de stockage d'énergie électrique rechargeable (52) et un générateur électrique (51), un réseau électrique principal (20) relié directement électriquement auxdites sources d'énergie électrique (11) et des équipements électriques (13) alimentés électriquement par ledit réseau électrique principal (20). Ledit procédé comporte une première alimentation électrique (110) dudit réseau électrique principal (20) par ledit dispositif de stockage d'énergie électrique rechargeable (52), et une seconde alimentation électrique (120) dudit réseau électrique principal (20) par ledit générateur électrique (51), puis une régulation (130) d'une tension électrique interne dudit générateur électrique (51) en fonction d'un premier courant électrique délivré par ledit dispositif de stockage d'énergie électrique rechargeable (52).

## Description

La présente invention est du domaine des architectures électriques destinées aux véhicules et en particulier aux aéronefs.

La présente invention concerne un procédé d'alimentation électrique d'un réseau électrique non régulé en tension électrique d'un véhicule ainsi qu'une architecture électrique comportant un tel réseau électrique non régulé en tension électrique.

La présente invention est en particulier destinée à l'alimentation électrique de moteurs électriques d'un système de propulsion électrique d'un véhicule tel qu'une automobile ou bien un aéronef.

Par exemple, un aéronef multirotor peut comporter plusieurs rotors participant à la sustentation et/ou à l'avancement de l'aéronef et entraînés en rotation par un ou plusieurs moteurs électriques.

Une architecture électrique comporte généralement une ou plusieurs sources d'énergie électrique ainsi qu'au moins un réseau électrique et un ou plusieurs équipements électriques, de tels équipements électriques pouvant comprendre par exemple des moteurs électriques reliés électriquement au réseau électrique et alimentés électriquement par au moins une source d'énergie électrique via ce réseau électrique.

Une source d'énergie électrique peut comporter un dispositif de stockage d'énergie électrique rechargeable tel qu'une batterie ou bien un supercondensateur...

Une source d'énergie électrique peut aussi comprendre un générateur électrique. Un générateur électrique peut être muni d'une pile à combustible consommant par exemple de l'hydrogène pour produire une énergie électrique. Un générateur électrique peut comporter une machine électrique fonctionnant au moins en mode générateur et entraînée en rotation par un organe tournant.

Un tel organe tournant peut être un arbre d'une machine thermique tel qu'une turbine ou un moteur à pistons... Un générateur électrique comportant une machine électrique et une machine thermique entraînant en rotation par la machine électrique constitue une source d'énergie électrique dite « hybride ».

Ces différentes sources d'énergie électrique sont de natures différentes et ont en conséquence des comportements électriques différents.

Notamment, un dispositif de stockage d'énergie électrique rechargeable délivre un courant électrique avec une tension électrique qui diminue généralement avec la quantité d'énergie que contient ce dispositif de stockage d'énergie électrique rechargeable. Pour une batterie, la tension électrique délivrée est également liée à la tension à vide et à la résistance électrique interne de la batterie.

Une machine électrique délivre généralement un courant électrique alternatif et doit donc être associée à un redresseur afin de transformer ce courant électrique alternatif en un courant électrique continu. En outre, une machine électrique peut délivrer, selon sa conception, un courant électrique avec une tension électrique sensiblement constante, par exemple régulée, ou bien avec une tension susceptible de varier au cours de son fonctionnement.

Classiquement dans une architecture électrique, une source d'énergie électrique est généralement reliée à un réseau électrique ou à un bus dont la tension électrique est constante afin d'alimenter efficacement les différents équipements électriques reliés à ce réseau électrique ou à ce bus. Dans un but de simplification, par la suite, l'expression « réseau électrique » désigne aussi bien un réseau électrique qu'un bus.

Dès lors, un convertisseur électrique, par exemple un convertisseur courant continu/courant continu dit « convertisseur DC/DC », est agencé entre une source d'énergie électrique et le réseau électrique. Ce convertisseur électrique permet ainsi de réguler la tension électrique que reçoit le réseau électrique afin que celle-ci soit conforme à la tension électrique utilisée par le réseau électrique quelle que soit la tension électrique délivrée par la source d'énergie électrique.

De plus, en présence d'un dispositif de stockage d'énergie électrique rechargeable, un convertisseur électrique, agencé entre ce dispositif de stockage d'énergie électrique et le réseau électrique, permet le cas échéant à ce dispositif de stockage d'énergie électrique d'être rechargé électriquement par une ou plusieurs autres sources d'énergie électrique reliées au réseau électrique.

En outre, lorsque les équipements électriques reliés à un réseau électrique nécessitent une puissance électrique importante, tels que des moteurs électrique destinés à la propulsion d'un véhicule, un convertisseur électrique utilisé est dit « de puissance » et peut être d'une masse importante. En effet, un convertisseur électrique de puissance a une densité de puissance généralement de l'ordre de un à dix kiloWatts par kilogramme, en fonction notamment du mode de refroidissement utilisé, typiquement de l'air ou un liquide, et du besoin en isolation galvanique de la partie transformateur. Dès lors, pour un moteur électrique d'une puissance de l'ordre de 100 kiloWatts, l'architecture électrique comporte au moins un convertisseur électrique de puissance d'une masse de 10 à 100 kilogrammes ce qui est significatif et pénalisant pour la masse totale du véhicule.

L'art antérieur de l'invention comporte par exemple le document FR 3056555 décrivant un système propulsif pour un aéronef multirotor dont les rotors sont entraînés en rotation par des moteurs électriques alimentés par un réseau électrique. Le réseau électrique peut comporter comme sources d'énergie électrique un générateur électrique muni d'une machine électrique entraînée en rotation par un moteur thermique et/ou un dispositif de stockage d'énergie électrique tel qu'une batterie par exemple. Le réseau électrique comporte également des redresseurs et des moyens de conversion électrique, tel que des onduleurs, afin de transformer le courant électrique fourni par un générateur électrique et/ou alimentant un moteur électrique.

En outre, lorsqu'une architecture électrique comporte plusieurs sources d'énergie électrique, celles-ci peuvent fonctionner simultanément de façon permanente ou bien en fonction des conditions de fonctionnement du véhicule et/ou de la phase de vol de l'aéronef lorsque le véhicule est un aéronef.

Le document US 2008/0143119 décrit un système électrique de véhicule automobile incluant un générateur électrique qui charge une batterie pour alimenter diverses charges électriques du véhicule. Ce système incorpore un appareil de détection du courant électrique de la batterie. Le générateur électrique incorpore un appareil de commande intégré, pour commander la tension électrique à sa sortie en ajustant un niveau moyen de courant électrique d'excitation.

Le document EP 0953472 décrit un procédé de commande de l'état de charge d'une batterie de véhicule routier hybride, selon un état de charge établi à une pleine charge, par commande d'un générateur de puissance électrique et d'une pile à combustible. Ce procédé comprend une étape de commande de la sortie de courant électrique et également de la production de courant électrique de la pile à combustible et de la sortie de courant électrique du générateur.

Le document XP028516095 ("Fuel cell and Li-ion battery direct hybridization system for aircraft applications") décrit l'utilisation d'une pile à combustible et d'un système d'hybridation de batteries LI-ION. Des diodes font lieu de convertisseur DC-DC à la place de ceux habituellement utilisés pour ajuster les tensions de la pile à combustible et des batteries.

Le document US 5778997 décrit une voiture électrique développée pour éliminer les gaz d'échappement émis par un moteur à combustion interne. Un circuit forme une unité de redressement connectée à une batterie et rectifie le courant électrique de sortie d'un générateur.

Le document US 2006/0043938 décrit un système électrique pour atténuer l'impact de charges intermittentes importantes sur un système de distribution de puissance de 12 volts d'un véhicule. Une approche consiste à réguler la tension aux charges critiques à l'aide d'un convertisseur élévateur séparé.

La présente invention a alors pour objet de proposer un procédé d'alimentation électrique d'un réseau électrique ainsi qu'une architecture électrique permettant de s'affranchir des limitations mentionnées ci-dessus et d'optimiser la masse de l'architecture électrique.

La présente invention concerne un procédé d'alimentation électrique d'un réseau électrique non régulé en tension électrique d'un véhicule. Le véhicule comporte une architecture électrique munie par exemple de :
- au moins deux sources d'énergie électrique incluant au moins un dispositif de stockage d'énergie électrique rechargeable et au moins un générateur électrique,
- un réseau électrique principal relié directement électriquement auxdites au moins deux sources d'énergie électrique, et
- au moins un équipement électrique alimenté électriquement par le réseau électrique principal.

Le procédé d'alimentation électrique d'un réseau électrique non régulé en tension électrique d'un véhicule selon l'invention est remarquable en ce qu'il comporte les étapes suivantes :
- première alimentation électrique du réseau électrique principal par ledit au moins un dispositif de stockage d'énergie électrique rechargeable délivrant un premier courant électrique avec une première tension électrique,
- seconde alimentation électrique du réseau électrique principal par ledit au moins un générateur électrique délivrant un second courant électrique avec une seconde tension électrique, ladite seconde tension électrique étant égale à ladite première tension électrique, et
- régulation de la tension électrique interne dudit au moins un générateur électrique en fonction du premier courant électrique.

Le procédé d'alimentation électrique d'un réseau électrique non régulé en tension électrique d'un véhicule selon l'invention permet ainsi avantageusement la gestion de sources d'énergie électrique de natures et de comportements différents afin de garantir en permanence une alimentation électrique de chaque équipement électrique quel que soit l'état de chaque source d'énergie électrique.

En effet, le réseau électrique principal est relié directement électriquement aux sources d'énergie électrique, à savoir sans transformation ou modification du courant électrique fourni par chaque source d'énergie électrique avant qu'il atteigne le réseau électrique principal. En conséquence, cette architecture électrique ne comporte avantageusement aucun convertisseur électrique entre chaque source d'énergie électrique et le réseau électrique principal. De la sorte, chaque source d'énergie électrique fournit un courant électrique directement au réseau électrique principal. Le courant électrique fourni par chaque source d'énergie électrique est généralement un courant électrique continu.

Toutefois, un contacteur, un interrupteur ou tout dispositif équivalent peut, dans le cadre de l'invention, être agencé entre une source d'énergie électrique et le réseau électrique principal. En effet, un contacteur ou un interrupteur permet uniquement de fermer ou d'ouvrir la liaison électrique entre la source d'énergie électrique et le réseau électrique principal. De la sorte, le courant électrique peut circuler ou non entre la source d'énergie électrique et le réseau électrique principal. Cependant, aucune transformation ni conversion de ce courant électrique n'est introduite par un tel contacteur ou un tel interrupteur.

De plus, les sources d'énergie électrique étant reliées au même réseau électrique principal, ces sources d'énergie électrique fournissent des courants électriques avec une même tension électrique.

Concernant les sources d'énergie électrique, un dispositif de stockage d'énergie électrique rechargeable comporte par exemple une batterie et/ou un supercondensateur. Un tel dispositif de stockage d'énergie électrique rechargeable délivre un premier courant électrique avec une première tension électrique non régulée. Cette première tension électrique peut par exemple varier en fonction de l'état du dispositif de stockage et en particulier de la quantité d'énergie disponible dans le dispositif de stockage d'énergie électrique rechargeable. Par exemple, la tension électrique du courant électrique délivré par un dispositif de stockage d'énergie électrique rechargeable comportant une quantité maximale d'énergie électrique est supérieure à la tension électrique du courant électrique délivré par ce dispositif de stockage d'énergie électrique rechargeable comportant une quantité plus faible d'énergie électrique.

Concernant les sources d'énergie électrique, un générateur électrique comporte par exemple une pile à combustible et/ou une machine électrique entraînée en rotation par une machine thermique. Une machine électrique peut comporter un redresseur afin de transformer un courant électrique alternatif généré par la rotation de la machine électrique en courant électrique continu qui est fourni au réseau électrique principal.

Un tel redresseur peut aussi être relié électriquement à la machine électrique et agencé entre la machine électrique et le réseau électrique principal. Dans ce cas, le générateur électrique comporte la machine électrique, une machine thermique et le redresseur.

Un tel générateur électrique comportant une machine électrique peut délivrer un courant électrique dont les caractéristiques, à savoir sa tension électrique et son intensité électrique, peuvent varier en fonction d'un ou plusieurs paramètres de fonctionnement du générateur électrique. En particulier, ces caractéristiques du courant électrique délivré par une machine électrique peuvent être définies en fonction d'une tension interne de la machine électrique, désignée également force électromotrice (FEM).

Par exemple, dans le cas d'une machine électrique synchrone à excitation séparée, la tension électrique interne de la machine électrique est définie par un courant électrique d'excitation de la machine électrique issu par exemple par un régulateur extérieur à la machine électrique. Pour un courant électrique d'excitation sensiblement constant, la tension électrique interne d'une telle machine électrique synchrone est sensiblement constante et, par suite, les caractéristiques du courant électrique délivré par cette machine électrique synchrone sont alors sensiblement constantes. Une variation de ce courant électrique d'excitation entraîne une variation de la tension électrique interne de la machine électrique synchrone et, en conséquence, une variation des caractéristiques du courant électrique délivré par le générateur électrique.

On retrouve un fonctionnement sensiblement analogue avec une machine électrique à induction ou à réluctance variable ou encore à réluctance commutée dont la tension électrique interne délivré est fixée par le courant électrique généré par un onduleur que comporte la machine électrique.

La tension électrique interne d'un générateur électrique peut également être variable en fonction de la vitesse de rotation de la machine électrique et donc de la machine thermique qui l'entraîne. C'est par exemple le cas avec une machine électrique à excitation permanente, telle qu'un générateur synchrone à aimants permanents désigné généralement par l'acronyme PMG pour la désignation en langue anglaise « Permanent Magnet Generator ». Dès lors, toute variation de la vitesse de rotation de la machine thermique entraîne une variation de la tension électrique interne de la machine électrique et, en conséquence, une variation des caractéristiques du courant électrique délivré par le générateur électrique.

Dans le cas où le générateur électrique est une pile à combustible, la tension électrique interne de la pile à combustible est définie en fonction du débit de combustible, par exemple l'hydrogène. En conséquence, une variation de ce débit de combustible entraîne une variation de la tension électrique interne de la pile à combustible et, par suite, une variation des caractéristiques du courant électrique délivré par cette pile à combustible.

Les sources d'énergie électrique, de natures et de comportements différents sont donc susceptibles de fournir au réseau électrique principal des courants électriques avec des tensions électriques qui peuvent varier et donc être différentes. La tension électrique du réseau électrique principal est fixée par un dispositif de stockage d'énergie électrique rechargeable, quel que soit son fonctionnement, à savoir en mode générateur ou en mode recharge, et chaque générateur électrique s'adapte et fonctionne alors avec cette tension électrique. En conséquence, le réseau électrique principal alimente chaque équipement électrique avec un courant électrique dont la tension électrique peut varier. En effet, le réseau électrique principal dans le cadre de l'invention n'est pas régulé avec une tension électrique constante, l'architecture électrique ne comportant aucun convertisseur électrique entre chaque source d'énergie électrique et le réseau électrique principal. En outre, les équipements électriques reliés au réseau électrique principal doivent donc être adaptés afin de pouvoir être alimentés par des courants électriques avec différents tensions électriques.

L'absence de convertisseur électrique contribue avantageusement à réduire de façon importante la masse de cette architecture électrique, en particulier quand le réseau électrique principal délivre un courant électrique avec une tension électrique importante.

Le procédé d'alimentation électrique d'un réseau électrique non régulé en tension électrique peut de plus comprendre une ou plusieurs des caractéristiques qui suivent, prises seules ou en combinaison.

Selon un aspect, lorsqu'au moins un dispositif de stockage d'énergie électrique rechargeable et au moins un générateur électrique alimentent conjointement électriquement le réseau électrique principal, lors de la régulation, la tension électrique interne dudit au moins un générateur électrique peut être régulée en fonction de la première tension électrique et d'une première intensité électrique du premier courant électrique.

Selon un autre aspect, lorsqu'au moins un générateur électrique alimente seul le réseau électrique principal, lors de la régulation, la tension électrique interne dudit au moins un générateur électrique peut être régulée de sorte que cet au moins un générateur électrique alimente le réseau électrique principal. Ainsi, d'une part le réseau électrique principal fournit une énergie électrique à au moins un dispositif de stockage d'énergie électrique rechargeable afin de le charger électriquement et, d'autre part le réseau électrique principal alimente électriquement au moins un équipement électrique relié au réseau électrique principal.

En conséquence, la régulation de la tension électrique interne de chaque générateur électrique permet que chaque générateur électrique fournisse un courant électrique au réseau électrique principal nécessaire et suffisant afin soit d'alimenter le réseau électrique principal en parallèle du dispositif de stockage d'énergie électrique rechargeable, soit d'alimenter seul le réseau électrique principal et de recharger éventuellement le dispositif de stockage d'énergie électrique rechargeable.

De plus, la tension électrique interne dudit au moins un générateur électrique peut alors être régulée de sorte que le réseau électrique principal délivre un courant électrique comportant un courant électrique de recharge destiné audit au moins un dispositif de stockage d'énergie électrique rechargeable et un courant électrique d'alimentation destiné audit au moins un équipement électrique.

Le courant électrique de recharge peut comporter une intensité électrique constante. Lorsqu'un dispositif de stockage d'énergie électrique rechargeable est une batterie électrique munie d'accumulateurs électriques, le courant électrique de recharge peut comporter tout d'abord, pendant une première phase de recharge dudit dispositif de stockage d'énergie électrique rechargeable, une intensité électrique constante jusqu'à un seuil de tension électrique prédéfini, puis le courant électrique de recharge comporte une tension électrique constante.

Le courant électrique d'alimentation correspond par exemple à une puissance électrique requise pour alimenter respectivement chacun des équipements électriques.

Lorsqu'au moins un générateur électrique comporte une machine électrique et une machine thermique entraînant en rotation la machine électrique, l'étape de régulation peut réguler une vitesse de rotation de la machine thermique afin que le générateur électrique fonctionne avec la tension électrique interne requise et délivre alors le second courant électrique avec la seconde tension électrique et l'intensité électrique requises. La vitesse de rotation de la machine thermique peut ainsi être régulée en fonction de la première tension électrique du premier courant électrique, par exemple lorsque la machine électrique est une machine électrique synchrone à aimants permanents.

Lorsqu'au moins un générateur électrique comporte une machine électrique et une machine thermique entraînant en rotation la machine électrique, l'étape de régulation peut aussi réguler un courant électrique de pilotage de la machine électrique afin que le générateur électrique fonctionne avec la tension électrique interne requise et délivre alors le second courant électrique avec la seconde tension électrique et l'intensité électrique requises. Le courant électrique de pilotage de la machine électrique peut ainsi être régulé en fonction de la première tension électrique du premier courant électrique. Le courant électrique de pilotage d'une machine électrique est par exemple le courant électrique d'excitation d'une machine électrique synchrone à excitation séparée ou bien le courant électrique généré par un onduleur d'une machine électrique à induction ou à réluctance variable ou encore à réluctance commutée.

Selon un autre aspect, le procédé peut comporter une étape de déconnexion d'au moins un dispositif de stockage d'énergie électrique rechargeable du réseau électrique principal. Cette déconnexion d'au moins un dispositif de stockage d'énergie électrique rechargeable du réseau électrique principal intervient par exemple suite à la charge complète de ce dispositif de stockage d'énergie électrique rechargeable et afin de conserver cette énergie électrique pour une utilisation ultérieure. Cette déconnexion peut également se produire en cas de de détection d'un défaut sur le dispositif de stockage d'énergie électrique rechargeable, tel qu'une surchauffe, une surtension, une sous tension électrique ou encore court circuit électrique par exemple.

Selon un autre aspect, le procédé peut comporter une étape de contrôle de la seconde intensité électrique du second courant électrique fourni par au moins un générateur électrique afin de vérifier que la seconde intensité électrique ne dépasse pas une valeur maximale. Cette valeur maximale correspond par exemple à l'intensité électrique maximale qui peut être délivrée par le générateur électrique sans générer de dégradation sur ce générateur électrique.

Le procédé peut aussi comporter une étape de connexion d'au moins un dispositif de stockage d'énergie électrique rechargeable au réseau électrique principal, l'étape de connexion étant activée dès que la seconde intensité électrique est supérieure à la valeur maximale de sorte à réduire la seconde intensité électrique du second courant électrique fourni par cet au moins un générateur électrique. En effet, dans ce cas, le dispositif de stockage d'énergie électrique rechargeable peut fournir le premier courant électrique au réseau électrique principal de sorte que le générateur électrique fournisse le second courant électrique avec une seconde intensité électrique réduite.

La présente invention vise également une architecture électrique destinée à un véhicule et comportant :
- au moins deux sources d'énergie électrique dont au moins un dispositif de stockage d'énergie électrique rechargeable et au moins un générateur électrique, ledit au moins un dispositif de stockage d'énergie électrique rechargeable délivrant un premier courant électrique avec une première tension électrique non régulée,
- un réseau électrique principal, et
- au moins un équipement électrique alimenté électriquement par le réseau électrique.

Cette architecture électrique est remarquable en ce que lesdites au moins deux sources d'énergie électrique sont reliées électriquement directement au réseau électrique principal et l'architecture électrique comporte un dispositif de régulation d'une tension électrique interne dudit au moins un générateur électrique de sorte que ledit au moins un générateur électrique fournisse au réseau électrique un second courant électrique en fonction du premier courant électrique, le réseau électrique principal délivrant un courant électrique avec une tension électrique non constante.

Le véhicule peut par exemple comporter une installation motrice munie d'un ou de plusieurs moteurs électriques constituant des équipements électriques reliés au réseau électrique principal. En outre, le véhicule peut être un aéronef comportant au moins un rotor, chaque rotor étant entraîné en rotation par un moteur électrique.

Le véhicule peut aussi comporter un calculateur mettant en œuvre les étapes du procédé précédemment décrit. Ce calculateur peut par exemple comporter au moins un processeur, au moins un circuit intégré, au moins un système programmable, au moins un circuit logique ou bien tout dispositif équivalent, ces exemples ne limitant pas la portée donnée à l'expression « calculateur ». Le calculateur peut aussi comporter une mémoire stockant notamment des instructions relatives aux étapes du procédé.

Un générateur électrique peut comporter une pile à combustible et/ou une machine électrique et une machine thermique entraînant en rotation ladite machine électrique.

Un générateur électrique peut être un générateur électrique non régulé délivrant un second courant électrique avec une seconde tension électrique non régulée. Les caractéristiques du second courant électrique peuvent varier par exemple en fonction d'une tension électrique interne de ce générateur électrique. Lorsque le générateur électrique comporte une machine électrique et une machine thermique, cette tension électrique interne peut elle-même varier en fonction de la vitesse de rotation de la machine thermique de ce générateur électrique ou bien d'un courant électrique de pilotage de la machine électrique.

Le dispositif de régulation peut alors être un dispositif de régulation de la vitesse de rotation de la machine thermique ou bien du courant électrique de pilotage de la machine électrique.

Un générateur électrique peut aussi être un générateur électrique régulé délivrant un second courant électrique avec une seconde tension électrique régulée par un système de régulation que peut comporter ce générateur électrique.

En outre, l'architecture électrique peut comporter au moins un réseau électrique secondaire et au moins un dispositif de conversion de courant reliant le réseau électrique principal à chaque réseau électrique secondaire. Chaque réseau électrique secondaire délivre un courant électrique avec une tension électrique différente d'une tension électrique d'un courant électrique délivré par le réseau électrique principal. Un dispositif de conversion permet de transformer le courant électrique délivré par le réseau électrique principal en modifiant par exemple sa tension électrique avant qu'il atteigne le réseau secondaire.

Le réseau électrique principal est par exemple un réseau électrique dit « basse tension » et chaque réseau électrique secondaire est un réseau électrique dit « très basse tension ». Un réseau électrique basse tension délivre un courant électrique continu avec une tension électrique par exemple supérieure à 50 Volts et un réseau électrique secondaire très basse tension délivre un courant électrique continu avec une tension électrique par exemple inférieure à 50 Volts.

En outre, au moins un équipement électrique peut par exemple être un moteur électrique destiné à la propulsion du véhicule. Dans ce cas, chaque moteur électrique peut former avec chaque source d'énergie électrique une installation motrice. Cette installation motrice peut être considérée comme hybride lorsqu'au moins un générateur électrique comporte une machine électrique entraînée en rotation par une machine thermique.

De plus, le véhicule peut être un aéronef multirotor comportant plusieurs rotors, chaque rotor étant entraîné en rotation par un moteur électrique de l'aéronef afin d'assurer la sustentation et l'avancement de l'aéronef.

La présente invention vise également un système de propulsion électrique destiné à un véhicule et à un aéronef en particulier. Lorsqu'il est destiné à un aéronef, ce système de propulsion électrique comporte une architecture électrique telle que précédemment décrite et au moins un rotor. Au moins un équipement électrique de l'architecture électrique est un moteur électrique entraînant en rotation un rotor de l'aéronef.

L'invention et ses avantages apparaîtront avec plus de détails dans le cadre de la description qui suit avec des exemples donnés à titre illustratif en référence aux figures annexées qui représentent :
- la figure 1, une première architecture électrique,
- la figure 2, une deuxième architecture électrique,
- la figure 3, une troisième architecture électrique, et
- la figure 4, un schéma synoptique d'un procédé d'alimentation électrique d'un réseau électrique non régulé en tension électrique d'un véhicule.

Les éléments présents dans plusieurs figures distinctes sont affectés d'une seule et même référence.

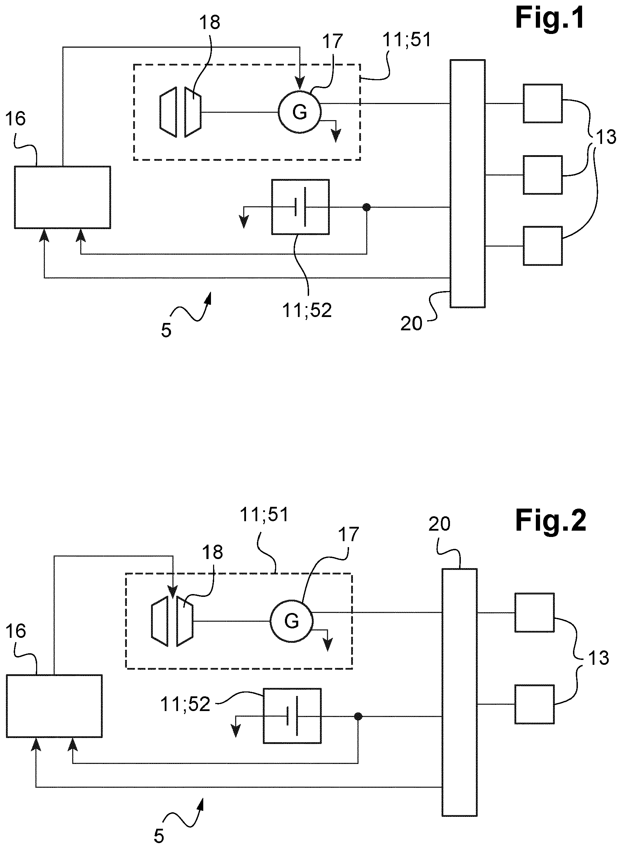

Les figures 1 à 3 représentent trois exemples de réalisation d'une architecture électrique 5 selon l'invention destinée à un véhicule, par exemple un véhicule automobile ou bien un aéronef.

De façon commune à ces trois exemples de réalisation, une architecture électrique 5 comporte au moins deux sources d'énergie électrique 11, un réseau électrique principal 20 relié électriquement aux sources d'énergie électrique 11, des équipements électriques 13 alimentés électriquement par le réseau électrique principal 20 et un dispositif de régulation 16. Les sources d'énergie électrique 11 comportent au moins un dispositif de stockage d'énergie électrique rechargeable 52 et au moins un générateur électrique 51.

Chaque dispositif de stockage d'énergie électrique rechargeable 52 délivre un premier courant électrique avec une première tension électrique non régulée. La première tension électrique peut notamment varier en fonction de la quantité d'énergie électrique que contient ledit dispositif de stockage d'énergie électrique rechargeable 52. Un dispositif de stockage d'énergie électrique rechargeable 52 est par exemple une batterie ou bien un supercondensateur.

Un générateur électrique 51 comporte par exemple une machine électrique 17 et une machine thermique 18, la machine thermique 18 entraînant en rotation la machine électrique 17 fonctionnant en mode générateur. Un générateur électrique 51 peut aussi comporter une pile à combustible. Un générateur électrique 51 délivre un second courant électrique avec une seconde tension électrique dont la valeur peut être sensiblement constante ou bien variable selon la technologie de ce générateur électrique 51.

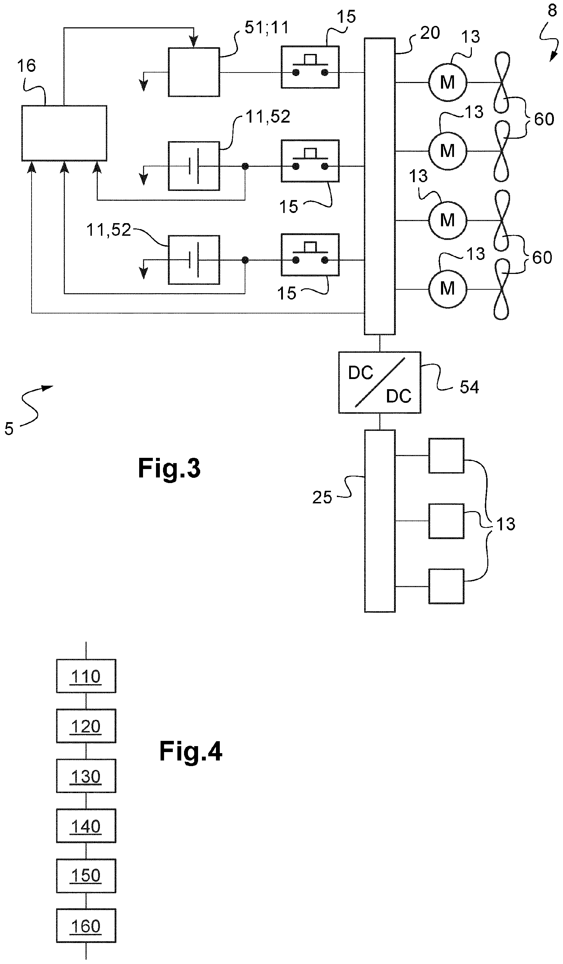

Les sources d'énergie électrique 11 sont reliées électriquement directement au réseau électrique principal 20. Les sources d'énergie électrique 11 peuvent par exemple être reliées électriquement au réseau électrique principal 20 par une simple liaison électrique continue comme représentée sur les figures 1 et 2. Les sources d'énergie électrique 11 peuvent aussi être reliées électriquement au réseau électrique principal 20 par des liaisons électriques comportant un contacteur 15 comme représenté sur la figure 3.

Le contacteur 15 permet uniquement de fermer ou d'ouvrir la liaison électrique entre une source d'énergie électrique 11 et le réseau électrique principal 20, mais ne transforme pas le courant électrique délivré par la source d'énergie électrique 11 avant qu'il atteigne le réseau électrique principal 20. Le contacteur 15 peut aussi être remplacé par un interrupteur ou tout dispositif équivalent permettant la fermeture ou l'ouverture d'une liaison électrique.

Le réseau électrique principal 20 étant relié électriquement au générateur électrique 51 et au dispositif de stockage d'énergie électrique rechargeable 52, la seconde tension électrique du second courant électrique est égale à la première tension électrique du premier courant électrique. Le dispositif de stockage d'énergie électrique rechargeable 52 fixe la tension électrique du réseau électrique principal 20 égale à la première tension électrique, qu'il fonctionne en mode générateur ou bien en mode recharge. Le générateur électrique 51 s'adapte à la tension électrique du réseau électrique principal 20 et fonctionne avec la seconde tension électrique égale à la première tension électrique. La régulation de la tension électrique interne du générateur électrique 51 lui permet de délivrer un premier courant électrique au réseau électrique principal 20 de sorte d'alimenter le réseau électrique principal 20 soit parallèlement au dispositif de stockage d'énergie électrique rechargeable 52, soit seul et de recharger le cas échéant le dispositif de stockage d'énergie électrique rechargeable 52.

Selon le premier exemple d'architecture électrique 5 représenté sur la figure 1, les sources d'énergie électrique 11 comportent un dispositif de stockage d'énergie électrique rechargeable 52 et un générateur électrique 51 muni d'une machine électrique 17 et d'une machine thermique 18 entraînant en rotation la machine électrique 17. Le dispositif de régulation 16 est relié à la machine électrique 17 et à la liaison électrique reliant le dispositif de stockage d'énergie électrique rechargeable 52 au réseau électrique principal 20.

Le dispositif de régulation 16 permet ainsi de réguler un courant électrique de pilotage de la machine électrique 17 en fonction du premier courant électrique délivré par le dispositif de stockage d'énergie électrique rechargeable 52. Le courant électrique de pilotage peut être par exemple un courant électrique d'excitation ou bien un courant électrique généré par un onduleur selon la technologie de la machine électrique 17. De la sorte, le dispositif de régulation 16 permet, par l'intermédiaire du courant électrique de pilotage, de réguler la force électromotrice, désignée également, « tension électrique interne », de la machine électrique 17 et, en conséquence, le générateur électrique délivre le second courant électrique avec la seconde tension électrique requise en fonction du premier courant électrique délivré par le dispositif de stockage d'énergie électrique rechargeable 52.

Le dispositif de régulation 16 comporte par exemple un dispositif de mesure d'un courant électrique et un calculateur. Le dispositif de mesure permet notamment de caractériser le premier courant électrique délivré par le dispositif de stockage d'énergie électrique rechargeable 52. Le dispositif de mesure permet par exemple de mesurer une intensité électrique ou bien une tension électrique du premier courant électrique. Le calculateur peut par exemple comporter au moins un processeur, au moins un circuit intégré, au moins un système programmable, au moins un circuit logique ou bien tout dispositif équivalent, ces exemples ne limitant pas la portée donnée à l'expression « calculateur ».

Selon le deuxième exemple d'architecture électrique 5 représenté sur la figure 2, les sources d'énergie électrique 11 comportent un dispositif de stockage d'énergie électrique rechargeable 52 et un générateur électrique 51 muni d'une machine électrique 17 et d'une machine thermique 18 entraînant en rotation la machine électrique 17. Le dispositif de régulation 16 est relié à la machine thermique 18 et à la liaison électrique reliant le dispositif de stockage d'énergie électrique rechargeable 52 au réseau électrique principal 20.

Le dispositif de régulation 16 permet alors de réguler la vitesse de rotation de la machine thermique 18 en fonction du premier courant électrique délivré par le dispositif de stockage d'énergie électrique rechargeable 52. Dans ce cas, la force électromotrice de la machine électrique 17 est fonction de cette vitesse de rotation de la machine thermique 18. De la sorte, le dispositif de régulation 16 permet , par l'intermédiaire de la vitesse de rotation de la machine thermique 18, de réguler la force électromotrice de la machine électrique 17 et, en conséquence, le générateur électrique 51 délivre le second courant électrique avec la seconde tension électrique requise en fonction du premier courant électrique délivré par le dispositif de stockage d'énergie électrique rechargeable 52.

Selon le troisième exemple d'architecture électrique 5 représenté sur la figure 3, les sources d'énergie électrique 11 comportent deux dispositifs de stockage d'énergie électrique rechargeable 52 et un générateur électrique 51. Le générateur électrique 51 peut comporter une pile à combustible ou bien une machine électrique 17 et une machine thermique 18 entraînant en rotation la machine électrique 17. Le dispositif de régulation 16 est relié au générateur électrique 51 et à la liaison électrique reliant chaque dispositif de stockage d'énergie électrique rechargeable 52 au réseau électrique principal 20. Ce dispositif de régulation 16 peut être selon l'un des deux exemples de dispositif de régulation 16 décrits sur les figures 1 et 2.

L'architecture électrique 5 comporte aussi des contacteurs 15 agencés respectivement entre une source d'énergie électrique 11 et le réseau électrique principal 20. Un contacteur 15 permet d'ouvrir ou de fermer la liaison électrique entre une source d'énergie électrique 11 et le réseau électrique principal 20.

L'architecture électrique 5 comporte également un réseau électrique secondaire 25 et un dispositif de conversion 54. Le dispositif de conversion 54 est relié électriquement au réseau électrique principal 20 et au réseau électrique secondaire 25. De la sorte, le réseau électrique secondaire 25 peut délivrer un courant électrique avec une tension électrique différente d'une tension électrique d'un courant électrique délivré par le réseau électrique principal 20. Le réseau électrique principal 20 est par exemple un réseau électrique dit « basse tension » délivrant un courant électrique continu avec une tension électrique supérieure à 50 Volts et le réseau électrique secondaire 25 est par exemple un réseau électrique dit « très basse tension » délivrant un courant électrique continu avec une tension électrique inférieure à 50 Volts. Des équipements électriques 13 sont également reliés au réseau électrique secondaire 25.

Un système de propulsion 8 est également représenté sur la figure 3. Ce système de propulsion 8 est par exemple destiné à un aéronef et comporte l'architecture électrique 5 et quatre rotors 60. Chaque rotor 60 est relié mécaniquement à un équipement électrique 13 formé par un moteur électrique. De la sorte, les rotors 60 sont entraînés respectivement en rotation par les moteurs électriques et peuvent permettre d'assurer la sustentation et la propulsion d'un aéronef.

Chacune de ces architectures électriques 5 permet ainsi avantageusement la gestion des sources d'énergie électriques 11 de natures et de comportements différents qu'elles comportent de sorte à garantir en permanence une alimentation électrique de chaque équipement électrique 13 quel que soit l'état de chaque source d'énergie électrique 11.

En effet, le réseau électrique principal 20 est relié directement électriquement aux sources d'énergie électrique 11, à savoir sans transformation ou modification du courant électrique fourni par chaque source d'énergie électrique 11 et ne comporte donc avantageusement aucun convertisseur électrique entre une source d'énergie électrique 11 et le réseau électrique principal 20.

En outre, pour les trois exemples d'architectures électriques 5 représentés sur les figures 1 à 3, le dispositif de régulation 16 est également relié au réseau électrique principal 20 et peut de la sorte surveiller la tension électrique du courant électrique délivré par le réseau électrique principal 20 afin de protéger la batterie 52 en cas de surtension ou de sous tension.

Un schéma synoptique d'un procédé d'alimentation électrique d'un réseau électrique non régulé en tension électrique d'un véhicule est représenté sur la figure 4. Le procédé peut être appliqué aux architectures électriques 5 précédemment décrites et comporte des étapes essentielles 110,120,130 et des étapes optionnelles 140,150,160. Le véhicule équipé de telles architectures électriques 5 peut aussi comporter un calculateur mettant en œuvre ces étapes.

Une première alimentation électrique 110 du réseau électrique principal 20 par au moins un dispositif de stockage d'énergie électrique rechargeable 52 avec le premier courant électrique est réalisée. La première tension électrique de ce premier courant électrique peut varier principalement en fonction de la quantité d'énergie disponible dans le dispositif de stockage d'énergie électrique rechargeable 52.

Une seconde alimentation électrique 120 du réseau électrique principal 20 par un générateur électrique 51 avec le second courant électrique est réalisée. La seconde tension électrique de ce second courant électrique peut varier principalement en fonction d'un ou plusieurs paramètres de ce générateur électrique 51 selon sa technologie, par exemple selon le courant électrique de pilotage de la machine électrique 17 qu'il comporte ou bien de la vitesse de rotation de la machine thermique 18 entraînant cette machine électrique 17. En outre, la seconde tension électrique de ce second courant électrique est égale à la première tension électrique de ce premier courant électrique, le premier courant électrique et le second courant électrique étant au même potentiel électrique, ces deux courants électriques étant reliés électriquement au réseau électrique principal 20.

Ensuite, une régulation 130 de la tension électrique interne du générateur électrique 51 en fonction du premier courant électrique est réalisée. Cette régulation permet ainsi d'adapter la tension électrique interne du générateur électrique 51 afin que le second courant électrique soit adapté à la première tension électrique du premier courant électrique délivrée par un dispositif de stockage d'énergie électrique rechargeable 52.

Selon la technologie du générateur électrique 51, la régulation 130 peut intervenir différemment sur le générateur 51. La régulation 130 peut par exemple réguler un courant électrique de pilotage d'une machine électrique 17 que comporte le générateur électrique 51 en fonction de la première tension électrique du premier courant électrique. Le courant électrique de pilotage est par exemple le courant électrique d'excitation d'une machine électrique synchrone à excitation séparée ou bien le courant électrique généré par un onduleur d'une machine électrique à induction ou à réluctance variable ou encore à réluctance commutée.

La régulation 130 peut aussi réguler une vitesse de rotation de la machine thermique 17 que comporte le générateur électrique 11 en fonction de la première tension électrique du premier courant électrique.

Par ailleurs, dans le cas où un dispositif de stockage d'énergie électrique rechargeable 52 et un générateur électrique 51 alimentent conjointement électriquement le réseau électrique principal 20, lors de la régulation 130, la tension électrique interne du générateur électrique 51 est régulée en fonction de la première tension électrique et d'une première intensité électrique du premier courant électrique.

Dans le cas où un générateur électrique 51 alimente seul le réseau électrique principal 20, le dispositif de stockage d'énergie électrique rechargeable 52 ne comportant par exemple pas assez d'énergie électrique, lors de la régulation 130, la tension électrique interne du générateur électrique 51 est régulée de sorte que le générateur électrique 51 alimente le réseau électrique principal 20. Ainsi, d'une part le réseau électrique principal 20 fournit une énergie électrique au dispositif de stockage d'énergie électrique rechargeable 52 afin de le charger électriquement et d'autre part le réseau électrique principal 20 alimente électriquement chaque équipement électrique 13 relié au réseau électrique principal 20.

Le procédé d'alimentation électrique d'un réseau électrique non régulé en tension électrique d'un véhicule selon l'invention permet ainsi avantageusement la gestion de sources d'énergie électrique 11 de natures et de comportements différents et de garantir en permanence une alimentation électrique de chaque équipement électrique 13 quel que soit l'état de chaque source d'énergie électrique 11.

Le procédé peut aussi comporter une étape de contrôle 140 de la seconde intensité électrique du second courant électrique fourni par un générateur électrique 51 afin de vérifier que la seconde intensité électrique ne dépasse pas une valeur maximale. En effet, en cas de dépassement de cette valeur maximale, une dégradation du générateur électrique 51 peut se produire.

Le procédé peut alors comporter également une étape de connexion 150 d'au moins un dispositif de stockage d'énergie électrique rechargeable 52 au réseau électrique principal 20. L'étape de connexion 150 est notamment activée dès que l'étape de contrôle 140 a détecté une seconde intensité électrique supérieure à la valeur maximale de sorte à fournir au réseau électrique 20 un premier courant électrique et en conséquence réduire la seconde intensité électrique du second courant électrique fourni par ce générateur électrique 51.

En outre, le procédé peut comporter une étape de déconnexion 160 d'au moins un dispositif de stockage d'énergie électrique rechargeable 52 du réseau électrique principal 20 par l'intermédiaire par du contacteur 15. Cette étape de déconnexion 160 peut intervenir une fois le dispositif de stockage d'énergie électrique rechargeable 52 complètement chargé électriquement ou bien suite à la détection d'un dysfonctionnement de ce dispositif de stockage d'énergie électrique rechargeable 52.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé d'alimentation électrique d'un réseau électrique non régulé en tension électrique d'un véhicule, ledit véhicule comportant une architecture électrique (5) munie de :
- au moins deux sources d'énergie électrique (11) incluant au moins un dispositif de stockage d'énergie électrique rechargeable (52) et au moins un générateur électrique (51),
- un réseau électrique principal (20) relié directement électriquement auxdites au moins deux sources d'énergie électrique (11), et
- au moins un équipement électrique (13) alimenté électriquement par ledit réseau électrique principal (20),
**caractérisé en ce que** ledit procédé comporte les étapes suivantes :
- première alimentation électrique (110) dudit réseau électrique principal (20) par ledit au moins un dispositif de stockage d'énergie électrique rechargeable (52) avec un premier courant électrique avec une première tension électrique,
- seconde alimentation électrique (120) dudit réseau électrique principal (20) par ledit au moins un générateur électrique (51) avec un second courant électrique avec une seconde tension électrique, ladite seconde tension électrique étant égale à ladite première tension électrique,
- régulation (130) d'une tension électrique interne dudit au moins un générateur électrique (51) en fonction dudit premier courant électrique.

2. Procédé selon la revendication 1,
**caractérisé en ce que**, lorsque ledit au moins un dispositif de stockage d'énergie électrique rechargeable (52) et ledit au moins un générateur électrique (51) alimentent conjointement ledit réseau électrique principal (20), lors de ladite régulation (130), ladite tension électrique interne dudit au moins un générateur électrique (51), est régulée en fonction de ladite première tension électrique et d'une première intensité électrique dudit premier courant électrique.

3. Procédé selon la revendication 1,
**caractérisé en ce que** lorsque ledit au moins un générateur électrique (51) alimente seul ledit réseau électrique principal (20), lors de ladite régulation (130), ladite tension électrique interne dudit au moins un générateur électrique (51) est régulée de sorte que ledit au moins un générateur électrique (51) d'une part alimente ledit réseau électrique principal (20) de sorte que ledit réseau électrique principal (20) fournisse une énergie électrique audit au moins un dispositif de stockage d'énergie électrique rechargeable (52) afin de charger électriquement ledit au moins un dispositif de stockage d'énergie électrique rechargeable (52) et d'autre part alimente électriquement ledit au moins un équipement électrique (13).

4. Procédé selon la revendication 3,
**caractérisé en ce que** ladite tension électrique interne dudit au moins un générateur électrique (51) est régulée de sorte que ledit réseau électrique principal (20) délivre un courant électrique comportant un courant électrique de recharge audit au moins un dispositif de stockage d'énergie électrique rechargeable (52) et un courant électrique d'alimentation dudit au moins un équipement électrique (13).

5. Procédé selon la revendication 4,
**caractérisé en ce que** ledit courant électrique de recharge comporte une intensité électrique constante.

6. Procédé selon la revendication 4,
**caractérisé en ce que**, lorsqu'un dispositif de stockage d'énergie électrique rechargeable (52) est une batterie électrique munie d'accumulateurs électriques, ledit courant électrique de recharge comporte une intensité électrique constante jusqu'à un seuil de tension électrique prédéfini pendant une première phase de recharge dudit dispositif de stockage d'énergie électrique rechargeable (52), puis ledit courant électrique de recharge comporte une tension électrique constante.

7. Procédé selon l'une quelconque des revendications 4 à 6,
**caractérisé en ce que** ledit courant électrique d'alimentation correspond à une puissance électrique requise pour alimenter ledit au moins un équipement électrique (13).

8. Procédé selon l'une quelconque des revendications 1 à 7,
**caractérisé en ce que** ledit procédé comporte une étape de déconnexion (160) d'au moins un dispositif de stockage d'énergie électrique rechargeable (52) dudit réseau électrique principal (20).

9. Procédé selon l'une quelconque des revendications 1 à 8,
**caractérisé en ce qu'**au moins un générateur électrique (51) comporte une machine électrique (17) et une machine thermique (18) entraînant en rotation ladite machine électrique (17), ladite étape de régulation (130) permettant de réguler une vitesse de rotation de ladite machine thermique (18) afin que ledit générateur électrique (51) fonctionne avec ladite seconde tension électrique interne.

10. Procédé selon l'une quelconque des revendications 1 à 9,
**caractérisé en ce qu'**au moins un générateur électrique (51) comporte une machine électrique (17) et une machine thermique (18) entraînant en rotation ladite machine électrique (17), ladite étape de régulation (130) permet de réguler un courant électrique de pilotage de ladite machine thermique (18) afin que ledit générateur électrique (51) fonctionne avec ladite seconde tension électrique interne.

11. Procédé selon l'une quelconque des revendications 1 à 10,
**caractérisé en ce que** ledit procédé comporte une étape de contrôle (140) de ladite seconde intensité électrique dudit second courant électrique afin de vérifier que ladite seconde intensité électrique ne dépasse pas une valeur maximale.

12. Procédé selon la revendication 11,
**caractérisé en ce que** ledit procédé comporte une étape de connexion (150) d'au moins un dispositif de stockage d'énergie électrique rechargeable (52) audit réseau électrique principal (20), ladite étape de connexion (150) étant activée dès que ladite seconde intensité électrique est supérieure à ladite valeur maximale de sorte à réduire ladite seconde intensité électrique dudit second courant électrique fournie par ledit au moins un générateur électrique (51).

13. Architecture électrique (5) destinée à un véhicule, ledit véhicule comportant :
- au moins deux sources d'énergie électrique (11) dont au moins un dispositif de stockage d'énergie électrique rechargeable (52) et au moins un générateur électrique (51), ledit au moins un dispositif de stockage d'énergie électrique rechargeable (52) délivrant un premier courant électrique avec une première tension électrique non régulée,
- un réseau électrique principal (20),
- au moins un équipement électrique (13) alimenté électriquement par ledit un réseau électrique (20), et
**caractérisée en ce que** lesdites au moins deux sources d'énergie électrique (11) sont reliées électriquement directement audit réseau électrique (20) et ladite architecture électrique (5) comporte un dispositif de régulation (16) d'une tension électrique interne dudit au moins un générateur électrique (51) de sorte que ledit au moins un générateur électrique (51) fournisse audit réseau électrique (20) un second courant électrique en fonction dudit premier courant électrique, ledit réseau électrique principal (20) délivrant un courant électrique avec une tension électrique non régulée.

14. Architecture électrique (5) selon la revendication 13,
**caractérisée en ce qu'**au moins un générateur électrique (51) comporte une machine électrique (17) et une machine thermique (18) entraînant en rotation ladite machine électrique (17) ledit dispositif de régulation (16) est un dispositif de régulation d'un courant électrique de pilotage de ladite machine électrique (17) afin que ledit au moins générateur électrique (51) fonctionne avec ladite tension électrique interne.

15. Architecture électrique (5) selon la revendication 13,
**caractérisée en ce qu'**au moins un générateur électrique (51) comporte une machine électrique (17) et une machine thermique (18) entraînant en rotation ladite machine électrique (17), ledit dispositif de régulation (16) est un dispositif de régulation d'une vitesse de rotation de ladite machine thermique (18) afin que ledit au moins générateur électrique (51) fonctionne avec ladite tension électrique interne.

16. Architecture électrique (5) selon l'une quelconque des revendications 13 à 15,
**caractérisée en ce que** ladite architecture électrique (5) comporte au moins un réseau électrique secondaire (25) et au moins un dispositif de conversion de courant (54) reliant ledit réseau électrique principal (20) audit au moins un réseau électrique secondaire (25), ledit au moins un réseau électrique secondaire (25) délivrant un courant électrique avec une tension électrique différente d'une tension électrique d'un courant électrique délivré par ledit réseau électrique principal (20).

17. Architecture électrique (5) selon l'une quelconque des revendications 13 à 16,
**caractérisée en ce qu'**au moins un équipement électrique (13) est un moteur électrique.

18. Système de propulsion électrique (8) destiné à un aéronef selon la revendication 17,
**caractérisé en ce que** ledit système de propulsion électrique (8) comporte une architecture électrique (5) selon la revendication 16 et au moins un rotor (60), ledit au moins un rotor (60) étant entraîné par un moteur électrique (13).
